# EUROPÄISCHE PATENTSCHRIFT

(11) **EP 3 455 402 B1**
(45) Veröffentlichungstag und Bekanntmachung des Hinweises auf die Patenterteilung: **14.07.2021**
(21) Anmeldenummer: 17724720.2
(22) Anmeldetag: 08.05.2017
(51) Int. Cl.: D07B 1/14, D07B 5/00, D07B 7/02

(54) **STAHLSEIL**
STEEL CABLE
CÂBLE EN ACIER

(30) Priorität: 09.05.2016 AT 504272016
(43) Veröffentlichungstag der Anmeldung: 20.03.2019
(73) Patentinhaber: Teufelberger Seil Gesellschaft m.b.H., 4600 Wels (AT)
(72) Erfinder: TRAXL, Robert, 4802 Ebensee (AT); KAISER, Gunter, 4600 Thalheim bei Wels (AT)
(74) Vertreter: Sonn & Partner Patentanwälte
(86) Internationale Anmeldenummer: PCT/AT2017/060120
(87) Internationale Veröffentlichungsnummer: WO 2017/193149

(56) Entgegenhaltungen:
- DE-A1-102004 009 797
- GB-A- 2 144 779
- GB-A- 2 199 961
- US-A- 3 530 661
- US-A1- 2005 078 922

## Beschreibung

Die Erfindung betrifft ein Stahlseil mit Stahldrähten und mit zumindest einem von den Stahldrähten umgebenen, zur Erfassung von lastbedingten Seildehnungen vorgesehenen Lichtwellenleiter, welcher eine von einem Kunststoffmantel umgebene Glasfaser aufweist.

Die Erfindung betrifft zudem ein Verfahren zur Herstellung eines Stahlseils mit Stahldrähten und mit zumindest einem, zur Erfassung von lastbedingten Seildehnungen vorgesehenen Lichtwellenleiter, welcher eine von einem Kunststoffmantel umgebene Glasfaser aufweist.

Es ist bekannt, Seile, insbesondere auch Stahlseile, mit einem darin fest angeordneten Lichtwellenleiter zu versehen, welcher unter Zugbelastung des Seils vorzugsweise die selbe Dehnung wie das Seil selbst erfährt. Mittels geeigneter, bekannter Messverfahren, beispielsweise der optischen Zeitbereichs-Reflektometrie (OTDR) oder der optischen Frequenzbereichs-Reflektometrie (OFDR) werden Belastungszustände im Lichtwellenleiter und damit im Seil erfasst, und aus diesen Messergebnissen kann auf Schwachstellen im Seil, beispielsweise Seilbrüche, oder auf die Ablegereife des Seils rückgeschlossen werden. Das Seil kann somit rechtzeitig vor dem Versagen ausgetauscht werden. Wesentlich hierfür ist eine schlupffreie Befestigung des Lichtwellenleiters im Seil.

Die US 6,999,641 B2 offenbart ein Kunststoffseil mit einem Lichtwellenleiter aus Kunststoff zur Erfassung der Seildehnung und zur Abschätzung der Seil-Restlebensdauer mittels OTDR oder OFDR. Der Lichtwellenleiter weist eine Ummantelung aus hartem Kunststoff auf, in welcher der Lichtwellenleiter in unbelastetem Zustand verschiebbar aufgenommen ist, während in Folge einer auf das Seil wirkenden axialen Kraft die Ummantelung mittels eines zusätzlichen um die Ummantelung geflochtenen Seils lateral komprimiert und der Lichtwellenleiter hierdurch schlupffrei festklemmt wird. Der Lichtwellenleiter ist somit nicht dauerhaft im Seil fixiert. Zudem ist im Seil das eigens vorgesehene geflochtene Seil angeordnet, welches insbesondere bei langen Seilen deren Komplexität, den Herstellungsaufwand und die Kosten erhöht.

Die EP 0 538 779 A2 offenbart ein zu überwachendes Stahlseil mit mehreren Drähten, die einen rohrförmigen Kernstab oder Kerndraht umgeben, in welchem ein Lichtwellenleiter zur Überwachung des Seils auf Dehnung oder Beschädigung angeordnet ist. Um den Lichtwellenleiter fest mit dem Kerndraht zu verbinden, kann dieser in den Kerndraht geklebt werden. Der Klebevorgang ist jedoch aufwändig und insbesondere bei langen Seilen nicht notwendiger Weise ausreichend zuverlässig, um den Lichtwellenleiter entlang seiner gesamten Längserstreckung im Kerndraht und insbesondere im Seil zu fixieren.

Die US 5,182,779 offenbart ein System mit einer Messeinrichtung zur Erfassung von Dehnungen eines Drahtseils, beispielsweise für Aufzüge. Das Seil weist beispielsweise parallele Drähte auf, zwischen welchen eine Glasfaser aufgenommen ist. Die parallelen Drähte sind zudem mit Bindeelementen umwickelt. Ebenso kann eine ummantelte Glasfaser mit den Drähten des Seils verklebt sein. Auch hier ist fraglich, ob der Lichtwellenleiter zuverlässig und kostengünstig entlang der Längserstreckung des Seils fixiert werden kann.

Die US 3 530 661 A betrifft ein Verfahren zur Herstellung eines verstärkten Kabels zur Bohrlochvermessung, insbesondere zur Messung der Tiefe eines Vermessungswerkzeugs im Bohrloch, mit einem durch thermoplastisches Material isolierten elektrischen Leiter zur Kommunikation mit dem Vermessungswerkzeug. Dabei sollen Kabeldehnungen vermieden werden.

Die GB 2 144 779 A offenbart ein Seil, in welchem ein Lichtwellenleiter, welcher zumindest eine Licht leitende Faser umgeben von einem Mantel aufweist, in einem formstabilen, durch Drähte gebildeten Durchgang aufgenommen ist. Zwischen dem Lichtwellenleiter und den Wänden des Durchgangs sind weiche Längskörper zur Beabstandung des Lichtwellenleiters von den Wänden des Durchgangs und zur Fixierung der Lage des Lichtwellenleiters im Durchgang vorgesehen.

Aus der EP 1 970 487 A2 und der GB 2 175 323 A gehen Drahtseile mit Lichtwellenleitern hervor, die für eine Signal- bzw. Datenübertragung vorgesehen sind.

Es ist nun Aufgabe der Erfindung, ein Stahlseil wie eingangs angegeben zu schaffen, das einen Lichtwellenleiter für eine möglichst zuverlässige und präzise Dehnungsmessung des Seils enthält. Insbesondere soll die Anordnung des Lichtwellenleiters im Seil eine Dehnungsmessung mit hoher Ortsauflösung entlang des Seils ermöglichen. Der Lichtwellenleiter soll hierfür dauerhaft und fest im Seil fixiert sein.

Es ist weiters Aufgabe der Erfindung, ein Verfahren wie eingangs angegeben zu schaffen, das eine kostengünstige Herstellung des Seils und eine zuverlässige Fixierung des Lichtwellenleiters im Seil ermöglicht.

Hierfür sieht die Erfindung ein Stahlseil wie in Anspruch 1 und ein Verfahren wie in Anspruch 6 definiert vor. Vorteilhafte Ausführungsformen und Weiterbildungen sind in den abhängigen Ansprüchen angegeben.

Gemäß der Erfindung ist vorgesehen, dass die zum Lichtwellenleiter nächstgelegenen Stahldrähte in einer Querschnittsansicht an dem Lichtwellenleiter anliegen und der Lichtwellenleiter und zumindest die zum Lichtwellenleiter nächstgelegenen Stahldrähte miteinander verpresst und verdichtet sind, welche nächstgelegenen Stahldrähte dauerhaft in seine Mantelfläche eindrücken, wodurch die Querschnittsform der Mantelfläche des Lichtwellenleiters von einer unbelasteten Form, insbesondere von einer Kreisform, abweicht und der Lichtwellenleiter kontinuierlich entlang zumindest einem Teil seiner Längserstreckung schlupffrei zwischen den ihm nächstgelegenen Stahldrähten kraftschlüssig und formschlüssig eingeklemmt ist. Das Stahlseil, dessen Zustand bzw. Zuverlässigkeit mittels eines einen Lichtwellenleiter voraussetzenden Messverfahrens überwacht werden soll, weist für die Aufnahme der Seillast vorgesehene Stahldrähte auf, welche den Lichtwellenleiter umgeben. Hierbei ist es günstig, wenn auch nicht zwingend erforderlich, wenn der Lichtwellenleiter, im Seilquerschnitt betrachtet, in der Mitte des Seils angeordnet und somit besonders sicher vor Beschädigungen geschützt ist. Zudem wird auf diese Weise und durch eine bevorzugte symmetrische Anordnung der den Lichtwellenleiter umgebenden Stahldrähte, welche symmetrisch eine Haltekraft in diesen einleiten, der Lichtwellenleiter in radialer Richtung im Wesentlichen gleichmäßig belastet. Der Lichtwellenleiter selbst weist als lichtleitenden Körper eine Glasfaser auf, wodurch besonders präzise Messungen der durch die Seilbelastung verursachten Dehnung des Lichtwellenleiters begünstigt werden. Insbesondere eignen sich Glasfasern für Dehnungsmessungen nach dem Prinzip der Rayleigh-Streuung oder der Brillouin-Streuung. Eine Abtastung der Rayleigh-Streuung entlang der Glasfaser ermöglicht beispielsweise räumliche Auflösungen der Dehnungsmessung im Millimeterbereich und somit besonders präzise Aussagen über lokale Schwachstellen oder Beschädigungen, beispielsweise Drahtbrüche, im Seil. Zum Schutz vor Beschädigungen ist die Glasfaser von einem flexiblen Kunststoffmantel umgeben.

Um die zu erfassenden Seildehnungen möglichst unverändert auf den Lichtwellenleiter zu übertragen, ist dieser im Wesentlichen unverschiebbar zwischen den Stahldrähten aufgenommen. Dies wird erzielt, indem zumindest die zum Lichtwellenleiter nächstgelegenen Stahldrähte mit dem Lichtwellenleiter verpresst sind und dauerhaft gegen seine Mantelfläche drücken. Selbstverständlich können auch vom Lichtwellenleiter weiter entfernte Stahldrähte, welche an den zum Lichtwellenleiter nächstgelegenen Stahldrähten anliegen, mit dem Lichtwellenleiter verpresst sein und hierdurch dauerhaft gegen seine Mantelfläche drücken. Das Seil wird durch die Verpressung verdichtet. Ein übermäßiger Druck könnte die Dämpfung der Glasfaser so weit erhöhen, dass insbesondere für große Seillängen von mehreren hundert bis zu mehreren tausend Metern die für die Dehnungserfassung vorgesehene Messung der Lichtsignale im Lichtwellenleiter nicht zuverlässig ausgeführt werden kann. Der Wert des auf die Mantelfläche wirkenden Drucks wird daher derart gewählt, dass einerseits der Lichtwellenleiter zuverlässig im Seil festgehalten wird und andererseits die Glasfaser nur in einem so geringen Ausmaß verformt wird, dass sich hierdurch die Dämpfungseigenschaften der Glasfaser nicht nennenswert verschlechtern. Das genaue zweckmäßige Maß der Verdichtung bzw. der Verpressung hängt unter anderem von den verwendeten Materialien und den Dimensionen der Glasfaser, des Kunststoffmantels und der Stahldrähte sowie vom Verwendungszweck des Seils ab, und ist von einem Fachmann entsprechend zu wählen. Es sei darauf hingewiesen, dass keinesfalls jede Glasfaser für die Verpressung mit den Stahldrähten, zur Erfassung der Seildehnung, geeignet ist. Insbesondere muss die Glasfaser selbst hinreichende Dehnungseigenschaften in ihrer Längsrichtung aufweisen, um sowohl während der Verpressung, welche zu einer Verlängerung des Lichtwellenleiters führt, als auch unter Seilbelastung nicht zu brechen.

Auf Grund der Verpressung weicht die Querschnittsform der Mantelfläche des Lichtwellenleiters im Bereich der Verpressung von einer unbelasteten Form ab. Da die Mantelfläche des Lichtwellenleiters im unbelasteten Zustand, also vor der Verpressung mit den Stahldrähten, im Allgemeinen einen kreisförmigen Querschnitt aufweist, weicht die Mantelfläche des zwischen den Stahldrähten fest aufgenommenen Lichtwellenleiters im Querschnitt, im Bereich der Verpressung, vorzugsweise entlang der gesamten Längserstreckung des Lichtwellenleiters, von der Kreisform ab. Insbesondere ist die Mantelfläche im Anlagebereich der zum Lichtwellenleiter nächstgelegenen Stahldrähte abgeflacht oder eingedrückt. Für eine präzise Dehnungserfassung ist der Lichtwellenleiter im zu überwachenden Seilabschnitt, insbesondere auch im gesamten Seil, entlang zumindest einem Teil seiner Längserstreckung, insbesondere entlang seiner gesamten Längserstreckung, mit den ihm nächstgelegenen Stahldrähten verpresst. Der Lichtwellenleiter ist somit kontinuierlich im zu überwachenden Seilabschnitt oder im gesamten Seil schlupffrei, d.h. unverschieblich, zwischen den ihm nächstgelegenen Stahldrähten eingeklemmt. Hierbei bewirkt der durch die dem Lichtwellenleiter nächstgelegenen Stahldrähte aufgebrachte Druck auf die Mantelfläche eine kraftschlüssige Fixierung des Lichtwellenleiters im Seil. Da die Stahldrähte die Mantelfläche zumindest in jenem Bereich, in welchem sie an der Mantelfläche anliegen, verformen, wird der Lichtwellenleiter zusätzlich formschlüssig im Seil fixiert.

Es sei darauf hingewiesen, dass es für bestimmte Anwendungsfälle ausreichend sein kann, die Seildehnung nur in einem Abschnitt des Stahlseils möglichst präzise zu erfassen. In diesem Fall kann der Lichtwellenleiter beispielsweise eine geringere Längserstreckung als das Stahlseil aufweisen. Zudem kann in diesem Fall der Lichtwellenleiter nur in jenem Abschnitt, in welchem die Seildehnung erfasst werden soll, fest und dauerhaft mit den Stahldrähten verklemmt bzw. verpresst sein. Eine solche Konstruktion liegt jedenfalls im Rahmen der Erfindung. Besonders zweckmäßig ist jedoch die Verpressung des Lichtwellenleiters entlang der gesamten Längserstreckung des Stahlseils.

Gemäß einer bevorzugten Ausführungsform der Erfindung sind der Lichtwellenleiter und zumindest die zum Lichtwellenleiter nächstgelegenen Stahldrähte zu einer Seillitze verseilt. Die Verseilung von Stahldrähten zu Seillitzen ermöglicht eine schadfreie Biegung um eine Seilscheibe, da die Drähte aufgrund ihrer Spiralform den notwendigen Längenausgleich in Form von Relativbewegungen durchführen. Durch die weitere Verseilung von Litzen zu Seilen wird eine doppelte Spiralform erzeugt, welche kleinere Biegeradien ermöglicht als bei einem Spiralseil mit einfacher Spiralform der Fall ist. Wenn nicht alle Stahldrähte des Seils mit dem Lichtwellenleiter zu einer Seillitze verseilt werden, können die verbliebenen Stahldrähte mit der den Lichtwellenleiter enthaltenden Litze beispielsweise ein Spiralseil bilden.

Besonders vorteilhaft ist es, wenn der Lichtwellenleiter schlupffrei in einem beschädigungsfrei verformbaren bzw. verformten Rohr eingeklemmt ist, welches von den dem Lichtwellenleiter nächstgelegenen Stahldrähten umgeben ist. Die Anordnung des Lichtwellenleiters im Rohr vereinfacht die Herstellung des Seils, da der Lichtwellenleiter vor der Verpressung mit den ihm nächstgelegenen Stahldrähten verschiebbar im Rohr angeordnet werden kann und erst mittels der Verpressung im Rohr fixiert wird. Durch geeignete Wahl des Materials und der Form des Rohrs kann die Mantelfläche des Rohrs auch genutzt werden, die von den Stahldrähten auf das Rohr aufgebrachte radiale Kraft auf eine größere Fläche des Kunststoffmantels der Lichtwellenleiters zu verteilen und somit einen zu großen lokalen Druck auf die Glasfaser, der die Messung beeinträchtigen würde, zu verhindern. Zudem bietet das Rohr dem Lichtwellenleiter einen zusätzlichen Schutz vor Beschädigungen. Das Rohr kann aus Kunststoff oder aus Metall gefertigt sein und wird vorzugsweise durch die Verpressung plastisch verformt, um nicht durch Elastizität den von den Stahldrähten aufgebrachten radialen Druckkräften entgegenzuwirken.

Wenn der Lichtwellenleiter mit den Stahldrähten oder die den Lichtwellenleiter aufweisende Seillitze zumindest Teil eines Litzenseils ist, kann das Stahlseil vorteilhaft als um eine Rolle laufendes Seil, beispielsweise zur Verbindung mit Aufzugskabinen, Anwendung finden. Für die Ausbildung eines Litzenseils werden im Wesentlichen alle Stahldrähte zu mehreren Litzen und diese zum Seil verseilt. Demgegenüber werden Stahlseile mit nur einer Litze, als Spiralseile, im allgemeinen als stehende, keiner Abrollbewegung ausgesetzte Seile verwendet.

Um zwischen temperaturbedingten und lastbedingten Dehnungen des Lichtwellenleiters und somit des Stahlseils unterscheiden zu können, kann günstiger Weise vorgesehen sein, dass zur Erfassung temperaturbedingter Seildehnungen zumindest ein zweiter Lichtwellenleiter in seiner Längsrichtung verschiebbar, von den ihm nächstgelegenen Stahldrähten nicht eingeklemmt, zwischen den Stahldrähten aufgenommen ist. Der zweite Lichtwellenleiter ist somit auch im zumindest teilweise verpressten Verwendungszustand des Stahlseils verschiebbar im Stahlseil angeordnet. Da die betriebsbedingte Seilbelastung auf den zweiten Lichtwellenleiter nicht übertragen wird, können seine mittels geeigneter Messverfahren erfasste Dehnungen dem Temperatureinfluss zugeordnet werden.

Zur Erfassung temperaturbedingter Seildehnungen ist es besonders günstig, wenn der zweite Lichtwellenleiter in einem formstabilen Rohr aufgenommen ist und eine vorzugsweise von einem Kunststoffmantel umgebene Glasfaser aufweist. In einer besonders zweckmäßigen Ausführung ist der zweite Lichtwellenleiter identisch zum für die Verpressung vorgesehenen Lichtwellenleiter ausgebildet. Die von der Seilbelastung unabhängige Beweglichkeit des zweiten Lichtwellenleiters in seiner Längsrichtung wird durch seine Aufnahme in einem formstabilen Rohr gewährleistet, welches im Gegensatz zum beschädigungsfrei verformbaren Rohr für den verpressten bzw. eingeklemmten Lichtwellenleiter auch durch die Verpressung nicht bis zu einem Einklemmen des zweiten Lichtwellenleiters verformt wird.

Betreffend das Verfahren ist gemäß der Erfindung vorgesehen, dass der Lichtwellenleiter entlang seiner Längserstreckung zumindest mit einem Teil der Stahldrähte verseilt wird und darauf folgend der Lichtwellenleiter und die damit verseilten Stahldrähte durch Aufbringen einer quer zur Längserstreckung des Lichtwellenleiters wirkenden Kraft entlang zumindest einem Teil seiner Längserstreckung miteinander verpresst und somit verdichtet werden, wodurch die Mantelfläche des Lichtwellenleiters von den zum Lichtwellenleiter nächstgelegenen Stahldrähten dauerhaft eingedrückt wird und der Lichtwellenleiter, kontinuierlich entlang zumindest dem Teil seiner Längserstreckung, schlupffrei zwischen den ihm nächstgelegenen Stahldrähten kraftschlüssig und formschlüssig einklemmt wird, und darauf folgend der Lichtwellenleiter gegebenenfalls mit einem verbliebenen Rest der Stahldrähte verseilt wird. Das Verfahren dient der Herstellung eines Stahlseils gemäß der vorstehenden Beschreibung. Der Lichtwellenleiter wird somit zunächst mit zumindest einem Teil der Stahldrähte verseilt. Besonders günstig ist es, wenn der Lichtwellenleiter in der Mitte dieser Stahldrähte und von diesen symmetrisch umgeben angeordnet wird. Daraufhin werden der Lichtwellenleiter und die mit diesem verseilten Stahldrähte durch Aufbringen einer radialen, also quer zur Längserstreckung des Lichtwellenleiters wirkenden Kraft miteinander verpresst und somit verdichtet. Die Verpressung und Verdichtung erfolgt zumindest entlang einem Teil der Längserstreckung des Lichtwellenleiters, vorzugsweise aber entlang dem gesamten Lichtwellenleiter und entlang dem gesamten Stahlseil. Durch die Verpressung wird die Mantelfläche des Lichtwellenleiters zumindest von den zum Lichtwellenleiter nächstgelegenen Stahldrähten dauerhaft verformt, insbesondere eingedrückt, und der Lichtwellenleiter wird kontinuierlich, entlang dem verpressten Abschnitt seiner Längserstreckung, schlupffrei zwischen den ihm nächstgelegenen Stahldrähten einklemmt. Sofern der Lichtwellenleiter nicht mit allen Stahldrähten des Stahlseile verseilt, verpresst und somit verdichtet wurde, wird in weiterer Folge der Lichtwellenleiter mit dem verbliebenen Rest der Stahldrähte verseilt. Verfahren zur Verdichtung von miteinander verseilten Stahldrähten sind dem Fachmann bekannt, weshalb hierauf in der Beschreibung nicht näher eingegangen werden muss. Insbesondere liegt es im Erfahrungsbereich eines Fachmanns, die Verdichtung derart auszuführen, dass einerseits der Lichtwellenleiter fest zwischen den Stahldrähten eingeklemmt ist und andererseits der Lichtwellenleiter hierdurch weder beschädigt noch dessen Lichtdämpfung für die Durchführung der Messung zu stark erhöht wird.

Gemäß einer bevorzugten Ausführungsform des Verfahrens ist es günstig, wenn der Lichtwellenleiter und zumindest die zum Lichtwellenleiter nächstgelegenen Stahldrähte vor der Verdichtung zu einer Seillitze verseilt werden. Auf diese Weise kann der Lichtwellenleiter besonders zuverlässig schlupffrei im Stahlseil aufgenommen werden. Selbstverständlich können mehr als nur die zum Lichtwellenleiter nächstgelegenen Stahldrähte mit dem Lichtwellenleiter zu einer Seillitze verseilt werden.

Um den Lichtwellenleiter besonders einfach im Stahlseil aufnehmen zu können, ist es günstig, wenn der Lichtwellenleiter vor der Verdichtung in seiner Längsrichtung verschiebbar in einem beschädigungsfrei verformbaren, mit den Stahldrähten zu verseilenden Rohr angeordnet wird und mittels der Verdichtung schlupffrei im Rohr, zwischen den ihn umgebenden Stahldrähten eingeklemmt wird. Der Lichtwellenleiter wird somit zunächst im Rohr aufgenommen, indem er in das Rohr eingeschoben wird oder der Mantel des Rohrs neben dem Lichtwellenleiter positioniert und dann in die Form eines den Lichtwellenleiter umgebenden Rohrs gebogen wird. Danach wird das den Lichtwellenleiter enthaltende Rohr mit zumindest einem Teil der Stahldrähte des Stahlseils verseilt, woraufhin die Verdichtung des Rohrs mit den verseilten Stahldrähten derart erfolgt, dass der Lichtwellenleiter schlupffrei im Rohr eingeklemmt wird.

Für eine kostengünstige Herstellung eines Stahlseils, welches eine Unterscheidung zwischen temperaturbedingten und lastbedingten Dehnungen des Lichtwellenleiters und somit des Stahlseils ermöglicht, kann vorgesehen sein, dass zur Erfassung temperaturbedingter Seildehnungen zumindest ein zweiter Lichtwellenleiter in seiner Längsrichtung verschiebbar, von den ihm nächstgelegenen Stahldrähten nicht eingeklemmt, mit den Stahldrähten verseilt wird. Der zweite Lichtwellenleiter wird daher nicht mit den Stahldrähten verpresst. Selbstverständlich können auch mehr als ein zweiter Lichtwellenleiter in seiner Längsrichtung verschiebbar im Stahlseil zur Erfassung temperaturbedingter Seildehnungen angeordnet sein.

Der zweite Lichtwellenleiter kann besonders vorteilhaft in seiner Längsrichtung verschiebbar im Stahlseil angeordnet sein, indem der zweite Lichtwellenleiter in einem formstabilen Rohr aufgenommen wird. Das formstabile Rohr gewährleistet sowohl während der Herstellung des Stahlseils als auch in dessen Betrieb eine Verschiebbarkeit des zweiten Lichtwellenleiters. Der zweite Lichtwellenleiter kann vor oder nach der Verseilung des formstabilen Rohrs mit den Stahldrähten im formstabilen Rohr aufgenommen werden.

Die Erfindung wird im Folgenden anhand von bevorzugten, nicht einschränkenden Ausführungsbeispielen unter Bezugnahme auf die Zeichnung noch weiter erläutert. Es zeigen:
Fig. 1 eine vereinfachte Darstellung eines Stahlseils mit einem darin aufgenommen Lichtwellenleiter in einem Längsschnitt;
Fig. 2 eine Querschittsansicht eines mehrere Litzen aufweisenden Stahlseils, welches in einer Litze einen in einem Rohr angeordneten Lichtwellenleiter aufweist;
Fig. 3 eine vergrößerte Darstellung des im Rohr angeordneten Lichtwellenleiters aus Fig. 2;
Fig. 4 eine vergrößerte Darstellung des im Rohr angeordneten Lichtwellenleiters aus Fig. 2 mit zu diesem nächstgelegenen Stahldrähten des Stahlseils;
Fig. 5 eine Querschittsansicht eines mehrere Litzen aufweisenden Stahlseils, welche Litzen zu jenen der Fig. 2 unterschiedlich ausgebildet sind, wobei in einer Litze ein in einem Rohr angeordneter Lichtwellenleiter zur Erfassung der lastbedingten Dehnung und in einem anderen Rohr ein zweiter Lichtwellenleiter zur Erfassung der temperaturbedingten Dehnung angeordnet ist; und
Fig. 6 eine vergrößerte Darstellung der in den Rohren angeordneten Lichtwellenleiter aus Fig. 5.

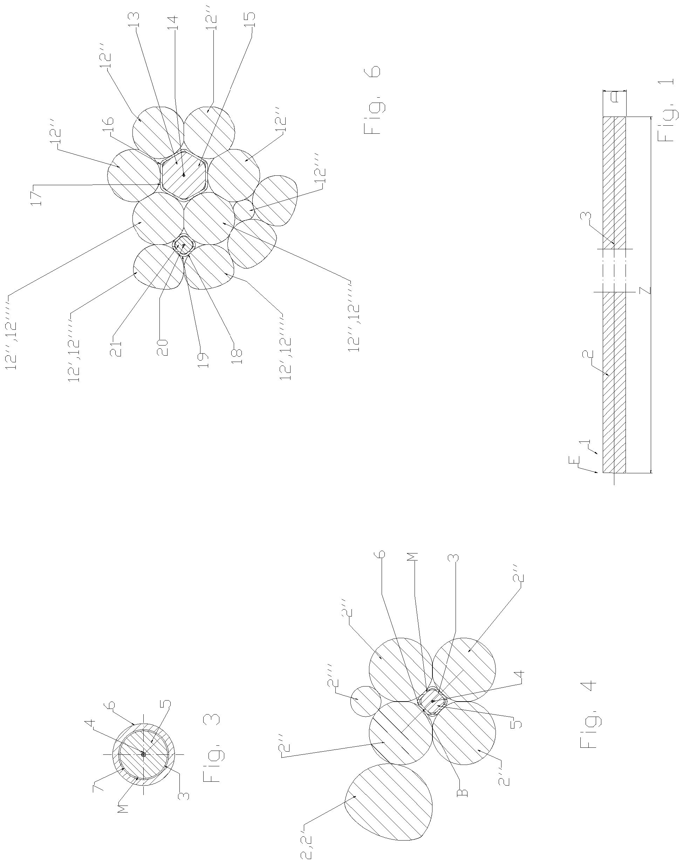

Fig. 1 zeigt ein Stahlseil 1 mit Stahldrähten 2 und mit zumindest einem von den Stahldrähten 2 umgebenen Lichtwellenleiter 3, welcher zur Erfassung von lastbedingten Dehnungen des Stahlseils 1 bzw. der Stahldrähte 2 vorgesehenen ist, in einer vereinfachten Darstellung. Das Stahlseil 1 und der Lichtwellenleiter 3 sind unterbrochen dargestellt, um die im Allgemeinen große Längserstreckung Z des Lichtwellenleiters 3 und des Stahlseils 1 im Vergleich zu deren Dicke D zu symbolisieren. An einem Ende E des Stahlseils 1 ist der Lichtwellenleiter 3 aus dem Stahlseil 1 herausragend dargestellt, um eine Anschlussmöglichkeit an eine nicht dargestellte Messvorrichtung zur Erfassung von Dehnungen des Lichtwellenleiters 3 zu schaffen.

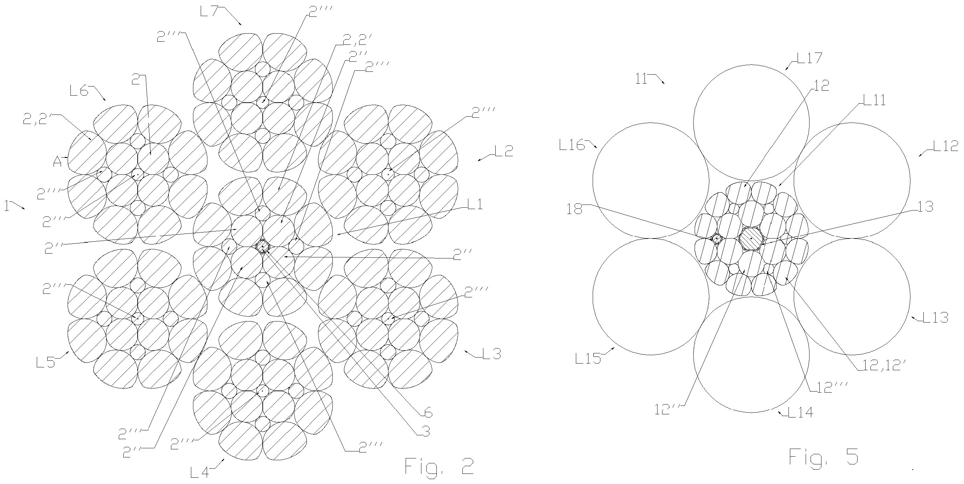

Fig. 2 zeigt ein Stahlseil 1 im Querschnitt, mit Stahldrähten 2, welche zu mehreren Litzen, im vorliegenden Beispiel zu 7 Litzen L1 bis L7, verseilt sind. Das Stahlseil 1 ist somit als Litzenseil ausgebildet, welches besonders für Anwendungen als laufendes Seil geeignet ist, beispielsweise als Aufzugsseil. Das Stahlseil 1 könnte aber ebenso in einer nicht dargestellten Ausführung als Spiralseil ausgebildet sein, um insbesondere als stehendes Seil Anwendung zu finden. Auch kann die Anzahl der Litzen L1 ... L7 von der hier dargestellten Zahl abweichen. Wie zudem an Hand der teilweise abgeflachten Außenfläche A der in den Litzen L1 ... L7 jeweils außen angeordneten Stahldrähte 2' ersichtlich ist, sind die Litzen L1 ... L7 verdichtet ausgebildet. In einer nicht dargestellten Ausführungsform könnte das Stahlseil 1 auch nur eine einzige verdichtete Litze L1 aufweisen. Eine der Litzen L1 ... L7, vorzugsweise die zentrale Litze L1, weist den Lichtwellenleiter 3 auf, welcher ebenfalls günstiger Weise in der Mitte der Litze L1 angeordnet ist.

Aus Fig. 3 geht besonders deutlich hervor, dass der Lichtwellenleiter 3 einen lichtleitenden Körper, gemäß der Erfindung eine Glasfaser 4, und einen um die Glasfaser 4 angeordneten Mantel, insbesondere einen Kunststoffmantel 5, mit einer Mantelfläche M aufweist. Der Lichtwellenleiter 3 ist in einem Rohr 6 aufgenommen, wobei zwischen dem Kunststoffmantel 5, insbesondere der Mantelfläche M, und dem Rohr 6 ein Zwischenraum 7 verbleibt, sodass in einem unbelasteten Zustand, d.h. vor der Verpressung des Lichtwellenleiters 3 oder des Rohrs 6 mit den Stahldrähten 2, der Lichtwellenleiter 3 verschiebbar im Rohr 6 aufgenommen ist. Der Lichtwellenleiter 3 und günstiger Weise auch das Rohr 6 weisen im unbelasteten Zustand im Querschnitt eine Kreisform auf. Die Kreisform stellt eine übliche unkomprimierte Ausführungsform des Lichtwellenleiters 3 bzw. seines Kunststoffmantels 5 dar.

In Fig. 2 ist der im Rohr 6 aufgenommene Lichtwellenleiter 3 in der Litze L1 in mit den Stahldrähten 2 der Litze L1 verpresstem Zustand dargestellt. Der Lichtwellenleiter 3 ist somit zumindest mit den zum Lichtwellenleiter 3 nächstgelegenen Stahldrähten 2", im vorliegenden Beispiel mit allen Stahldrähten 2 verpresst. Zwischen den zum Lichtwellenleiter 3 nächstgelegenen Stahldrähten 2" und den außen angeordneten Stahldrähten 2' sind im Durchmesser kleinere Fülldrähte 2"' vorgesehen, um hierdurch insgesamt die Litze L1, so wie auch die anderen Litzen L2 ... L7 als Fülldrahtlitzen auszubilden. In Folge der Verpressung drücken die zum Lichtwellenleiter 3 nächstgelegenen Stahldrähte 2", so wie auch die übrigen Stahldrähte 2 der Litze L1 dauerhaft gegen die Mantelfläche M des Lichtwellenleiters 3, wodurch die Querschnittsform der Mantelfläche M des Lichtwellenleiters 3 von der in Fig. 3 gezeigten unbelasteten Form, insbesondere von der Kreisform, abweicht. Somit wird der Lichtwellenleiter 3, kontinuierlich, d.h. im Wesentlichen ohne Unterbrechungen, entlang dem verpressten Teil der Längserstreckung Z, besonders bevorzugt entlang der gesamten Längserstreckung Z, schlupffrei zwischen den ihm nächstgelegenen Stahldrähten 2" eingeklemmt.

Die Verformung der Mantelfläche M des Lichtwellenleiters 3 sowie die Verformung des Rohrs 6 auf Grund der Verpressung mit den Stahldrähten 2 ist besonders deutlich in Fig. 4 erkennbar, welche einen Ausschnitt der in Fig. 2 dargestellten Litze L1 zeigt. Das Rohr 6 und der Kunststoffmantel 5 des Lichtwellenleiters 3 sind in den Anlagebereichen B, in welchen jeweils ein nächstgelegener Stahldraht 2" am Rohr 6 und am Lichtwellenleiter 3 anliegt verformt, insbesondere abgeflacht bzw. eingedrückt. In diesem Anlagebereich B reduziert sich die Größe des Zwischenraums 7 auf null und die nächstgelegenen Stahldrähte 2" drücken über das Rohr 6 auf den Lichtwellenleiter 3, um diesen fest und unverschiebbar im Stahlseil 1 festzuhalten.

Fig. 5 zeigt ein anderes Ausführungsbeispiel eines Stahlseils 11 mit Litzen L11 ... L17 aus Stahldrähten 12. Die äußeren Litzen L12 ... L17 sind nur schematisch dargestellt und können, so wie auch in Fig. 2, jede zweckmäßige Ausführung, beispielsweise die einer Fülllitze, aufweisen und bei Bedarf verdichtet sein. Die zentral angeordnet Litze L11 ist auf jeden Fall verdichtet und weist, vorzugsweise in der Mitte, einen Lichtwellenleiter 13 mit einer Glasfaser 14 und einem Kunststoffmantel 15 auf, siehe auch Fig. 6. Der Lichtwellenleiter 13 ist unter Ausbildung eines nicht im Detail dargestellten Zwischenraums 17 im unbelasteten, d.h. noch nicht verdichteten Zustand, verschiebbar in einem Rohr 16 angeordnet und im verdichteten Zustand im Rohr 16 schlupffrei eingeklemmt. Die Fig. 5 und 6 zeigen deutlich, dass der Lichtwellenleiter 13 und das Rohr 16 in diesem Ausführungsbeispiel von sechs zum Lichtwellenleiter 13 nächstgelegenen Stahldrähten 12" umgeben sind und mit diesen verpresst sind. An Stelle eines der Fülldrähte 12''' ist ein zweiter Lichtwellenleiter 18 vorgesehen, welcher dauerhaft verschiebbar, auch im verdichteten Zustand der Litze L11, in einem formstabilen Rohr 19 aufgenommen ist, um temperaturbedingte Dehnungen des Stahlseils 11 erfassen zu können. Der zweite Lichtwellenleiter 18 weist eine Glasfaser 20 und einen Kunststoffmantel 21 auf und wird von den ihm nächstgelegenen Stahldrähten 12'''' nicht eingeklemmt.

## Patentansprüche

1. Stahlseil (1, 11) mit Stahldrähten (2, 12) und mit zumindest einem von den Stahldrähten (2, 12) umgebenen, zur Erfassung von lastbedingten Seildehnungen vorgesehenen Lichtwellenleiter (3, 13), welcher eine von einem Kunststoffmantel (5, 15) umgebene Glasfaser (4, 14) aufweist, **dadurch gekennzeichnet, dass** die zum Lichtwellenleiter (3, 13) nächstgelegenen Stahldrähte (2", 12'') in einer Querschnittsansicht an dem Lichtwellenleiter (3, 13) anliegen und der Lichtwellenleiter (3, 13) und zumindest die zum Lichtwellenleiter (3, 13) nächstgelegenen Stahldrähte (2", 12'') miteinander verpresst und verdichtet sind, welche nächstgelegenen Stahldrähte (2", 12'') dauerhaft in seine Mantelfläche (M) eindrücken, wodurch die Querschnittsform der Mantelfläche (M) des Lichtwellenleiters (3, 13) von einer unbelasteten Form, insbesondere von einer Kreisform, abweicht und der Lichtwellenleiter (3, 13) kontinuierlich entlang zumindest einem Teil seiner Längserstreckung (Z) schlupffrei zwischen den ihm nächstgelegenen Stahldrähten (2", 12'') kraftschlüssig und formschlüssig eingeklemmt ist.

2. Stahlseil (1, 11) nach Anspruch 1, **dadurch gekennzeichnet, dass** der Lichtwellenleiter (3, 13) und zumindest die zum Lichtwellenleiter (3, 13) nächstgelegenen Stahldrähte (2", 12") zu einer Seillitze (L1, L11) verseilt sind.

3. Stahlseil (1, 11) nach Anspruch 1 oder 2, **dadurch gekennzeichnet, dass** der Lichtwellenleiter (3, 13) mit den Stahldrähten (2, 12) oder die den Lichtwellenleiter (3, 13) aufweisende Seillitze (L1, L11) zumindest Teil eines Litzenseils ist.

4. Stahlseil (1, 11) nach einem der Ansprüche 1 bis 3, **dadurch gekennzeichnet, dass** zur Erfassung temperaturbedingter Seildehnungen zumindest ein zweiter Lichtwellenleiter (18) in seiner Längsrichtung verschiebbar, von den ihm nächstgelegenen Stahldrähten (12'''') nicht eingeklemmt, zwischen den Stahldrähten (2, 12) aufgenommen ist.

5. Stahlseil (1, 11) nach Anspruch 4, **dadurch gekennzeichnet, dass** der zweite Lichtwellenleiter (18) in einem formstabilen Rohr (19) aufgenommen ist und eine vorzugsweise von einem Kunststoffmantel (21) umgebene Glasfaser (20) aufweist.

6. Verfahren zur Herstellung eines Stahlseils (1, 11) mit Stahldrähten (2, 12) und mit zumindest einem, zur Erfassung von lastbedingten Seildehnungen vorgesehenen Lichtwellenleiter (3, 13), welcher eine von einem Kunststoffmantel (5, 15) umgebene Glasfaser (4, 14) aufweist, **dadurch gekennzeichnet, dass** der Lichtwellenleiter (3, 13) entlang seiner Längserstreckung (Z) zumindest mit einem Teil der Stahldrähte (2, 12) verseilt wird und darauf folgend der Lichtwellenleiter (3, 13) und die damit verseilten Stahldrähte (2, 12) durch Aufbringen einer quer zur Längserstreckung (Z) des Lichtwellenleiters (3, 13) wirkenden Kraft entlang zumindest einem Teil seiner Längserstreckung (Z) miteinander verpresst und somit verdichtet werden, wodurch die Mantelfläche (M) des Lichtwellenleiters (3, 13) von den zum Lichtwellenleiter (3, 13) nächstgelegenen Stahldrähten (2", 12") dauerhaft eingedrückt wird und der Lichtwellenleiter (3, 13), kontinuierlich entlang zumindest dem Teil seiner Längserstreckung (Z), schlupffrei zwischen den ihm nächstgelegenen Stahldrähten (2", 12") kraftschlüssig und formschlüssig einklemmt wird, und darauf folgend der Lichtwellenleiter (3, 13) gegebenenfalls mit einem verbliebenen Rest der Stahldrähte (2, 12) verseilt wird.

7. Verfahren nach Anspruch 6, **dadurch gekennzeichnet, dass** der Lichtwellenleiter (3, 13) und zumindest die zum Lichtwellenleiter (3, 13) nächstgelegenen Stahldrähte (2", 12") vor der Verdichtung zu einer Seillitze (L1, L11) verseilt werden.

8. Verfahren nach Anspruch 6 oder 7, **dadurch gekennzeichnet, dass** der Lichtwellenleiter (3, 13) vor der Verdichtung in seiner Längsrichtung verschiebbar in einem beschädigungsfrei verformbaren, mit den Stahldrähten (2, 12) zu verseilenden Rohr (6, 16) angeordnet wird und mittels der Verdichtung schlupffrei im Rohr (6, 16), zwischen den ihn umgebenden Stahldrähten (2", 12") eingeklemmt wird.

9. Verfahren nach einem der Ansprüche 6 bis 8, **dadurch gekennzeichnet, dass** zur Erfassung temperaturbedingter Seildehnungen zumindest ein zweiter Lichtwellenleiter (18) in seiner Längsrichtung verschiebbar, von den ihm nächstgelegenen Stahldrähten (12'''') nicht eingeklemmt, mit den Stahldrähten (2, 12) verseilt wird.

10. Verfahren nach Anspruch 9, **dadurch gekennzeichnet, dass** der zweite Lichtwellenleiter (18) in einem formstabilen Rohr (19) aufgenommen wird.

## Claims

1. Steel cable (1, 11) comprising steel wires (2, 12) and comprising at least one optical waveguide (3, 13) which is surrounded by the steel wires (2, 12), is provided for detecting load-related cable elongations, and has a glass fibre (4, 14) surrounded by a plastics sheath (5, 15), **characterised in that** the steel wires (2", 12") closest to the optical waveguide (3, 13) abut the optical waveguide (3, 13) in a cross-sectional view and the optical waveguide (3, 13) and at least the steel wires (2", 12") closest to the optical waveguide (3, 13) are pressed together and compressed, which closest steel wires (2", 12") press permanently into the lateral surface (M) of said waveguide, as a result of which the cross-sectional shape of the lateral surface (M) of the optical waveguide (3, 13) deviates from an unloaded shape, in particular from a circular shape, and the optical waveguide (3, 13) is clamped continuously along at least a part of its longitudinal extension (Z) in a force-fitting and form-fitting manner, without slippage, between the steel wires (2", 12") closest to it.

2. Steel cable (1, 11) according to claim 1, **characterised in that** the optical waveguide (3, 13) and at least the steel wires (2", 12") closest to the optical waveguide (3, 13) are stranded to form a cable strand (L1, L11).

3. Steel cable (1, 11) according to either claim 1 or claim 2, **characterised in that** the optical waveguide (3, 13) with the steel wires (2, 12) or the cable strand (L1, L11) having the optical waveguide (3, 13) is at least part of a stranded cable.

4. Steel cable (1, 11) according to any of claims 1 to 3, **characterised in that**, in order to detect temperature-related cable elongations, at least a second optical waveguide (18) is accommodated between the steel wires (2, 12) so as to be displaceable in its longitudinal direction and such that it is not clamped by the steel wires (12"") closest to it.

5. Steel cable (1, 11) according to claim 4, **characterised in that** the second optical waveguide (18) is accommodated in a dimensionally stable tube (19) and has a glass fibre (20) preferably surrounded by a plastics sheath (21).

6. Method for producing a steel cable (1, 11) comprising steel wires (2, 12) and comprising at least one optical waveguide (3, 13) which is provided for detecting load-related cable elongations and has a glass fibre (4, 14) surrounded by a plastics sheath (5, 15), **characterised in that** the optical waveguide (3, 13) is stranded along its longitudinal extension (Z) at least with some of the steel wires (2, 12) and the optical waveguide (3, 13) and the steel wires (2, 12) stranded therewith are then pressed together and thus compressed by applying a force acting transversely to the longitudinal extension (Z) of the optical waveguide (3, 13) along at least part of its longitudinal extension (Z), as a result of which the lateral surface (M) of the optical waveguide (3, 13) is permanently pressed in by the steel wires (2", 12") closest to the optical waveguide (3, 13) and the optical waveguide (3, 13) is clamped continuously along at least the part of its longitudinal extension (Z) in a force-fitting and form-fitting manner, without slippage, between the steel wires (2", 12") closest to it, and the optical waveguide (3, 13) is then optionally stranded with the remainder of the steel wires (2, 12).

7. Method according to claim 6, **characterised in that** the optical waveguide (3, 13) and at least the steel wires (2", 12") closest to the optical waveguide (3, 13) are stranded to form a cable strand (L1, L11) prior to compression.

8. Method according to either claim 6 or claim 7, **characterised in that** the optical waveguide (3, 13), prior to compression, is arranged so as to be displaceable in its longitudinal direction in a tube (6, 16) which can be deformed without damage and which is to be stranded with the steel wires (2, 12), and is clamped by means of the compression, without slippage in the tube (6, 16), between the surrounding steel wires (2", 12").

9. Method according to any of claims 6 to 8, **characterised in that**, in order to detect temperature-related cable elongations, at least a second optical waveguide (18) is stranded with the steel wires (2, 12) so as to be displaceable in its longitudinal direction and such that it is not clamped by the steel wires (12"") closest to it.

10. Method according to claim 9, **characterised in that** the second optical waveguide (18) is accommodated in a dimensionally stable tube (19).

## Revendications

1. Câble d'acier (1, 11) avec des fils d'acier (2, 12) et avec au moins un guide d'ondes optiques (3, 13), entouré par les fils d'acier (2, 12), prévu pour détecter les dilatations de câble dues à la charge, qui présente une fibre de verre (4, 14) entourée par une enveloppe en matière synthétique (5, 15), **caractérisé en ce que** les fils d'acier (2", 12") les plus proches du guide d'ondes optiques (3, 13) s'appuient contre le guide d'ondes optiques (3, 13) dans une vue en coupe transversale et le guide d'ondes optiques (3, 13) et au moins les fils d'acier (2", 12") les plus proches du guide d'ondes optiques (3, 13) sont pressés les uns contre les autres et compactés, lesquels fils d'acier (2", 12") situés le plus près pénètrent par pression de manière durable dans sa surface d'enveloppe (M), de sorte que la forme en coupe transversale de la surface d'enveloppe (M) du guide d'ondes optiques (3, 13) s'écarte d'une forme non chargée, en particulier d'une forme circulaire, et le guide d'ondes optiques (3, 13) est enserré par assemblage par force et par assemblage de forme de manière continue le long d'au moins une partie de son étendue longitudinale (Z) sans glissement entre les fils d'acier (2", 12") les plus proches de lui.

2. Câble d'acier (1, 11) selon la revendication 1, **caractérisé en ce que** le guide d'ondes optiques (3, 13) et au moins les fils d'acier (2", 12") les plus proches du guide d'ondes optiques (3, 13) sont toronnés en un toron de câble (L1, L11).

3. Câble d'acier (1, 11) selon la revendication 1 ou 2, **caractérisé en ce que** le guide d'ondes optiques (3, 13) avec les fils d'acier (2, 12) ou le toron de câble (L1, L11) présentant le guide d'ondes optiques (3, 13) constitue au moins une partie d'un câble toronné.

4. Câble d'acier (1, 11) selon l'une des revendications 1 à 3, **caractérisé en ce qu'**au moins un deuxième guide d'ondes optiques (18) est reçu entre les fils d'acier (2, 12) de manière déplaçable dans sa direction longitudinale, non enserré par les fils d'acier (12'''') les plus proches de lui, pour détecter les dilatations de câble dues à la température.

5. Câble d'acier (1, 11) selon la revendication 4, **caractérisé en ce que** le deuxième guide d'ondes optiques (18) est reçu dans un tube (19) dimensionnellement stable et présente une fibre de verre (20) de préférence entourée par une enveloppe en matière synthétique (21).

6. Procédé de production d'un câble d'acier (1, 11) avec des fils d'acier (2, 12) et avec au moins un guide d'ondes optiques (3, 13) prévu pour détecter les dilatations de câble dues à la charge, qui présente une fibre optique (4, 14) entourée par une enveloppe (5, 15) en matière synthétique, **caractérisé en ce que** le guide d'ondes optiques (3, 13) est toronné le long de son étendue longitudinale (Z) avec au moins une partie des fils d'acier (2, 12), puis le guide d'ondes optiques (3, 13) et les fils d'acier (2, 12) toronnés avec lui sont pressés ensemble et ainsi compactés par application d'une force agissant transversalement à l'étendue longitudinale (Z) du guide d'ondes optiques (3, 13) le long d'au moins une partie de son étendue longitudinale (Z), de sorte que la surface d'enveloppe (M) du guide d'ondes optiques (3, 13) est soumise à une pénétration par pression en permanence par les fils d'acier (2", 12") les plus proches du guide d'ondes optiques (3, 13) et le guide d'ondes optiques (3, 13) est enserré par assemblage par force et par assemblage de forme en continu le long d'au moins une partie de son étendue longitudinale (Z), sans glissement entre les fils d'acier (2", 12") les plus proches de lui, puis le guide d'ondes optiques (3, 13) est toronné éventuellement avec un reste des fils d'acier (2, 12) qui demeure.

7. Procédé selon la revendication 6, **caractérisé en ce que** le guide d'ondes optiques (3, 13) et au moins les fils d'acier (2", 12") les plus proches du guide d'ondes optiques (3, 13) sont toronnés en un câble toronné (L1, L11) avant le compactage.

8. Procédé selon la revendication 6 ou 7, **caractérisé en ce que** le guide d'ondes optiques (3, 13) est agencé de manière déplaçable dans sa direction longitudinale avant le compactage dans un tube (6, 16) déformable sans dommage, destiné à être toronné avec les fils d'acier (2, 12), et est enserré sans glissement au moyen du compactage dans le tube (6, 16) entre les fils d'acier (2", 12") qui l'entourent.

9. Procédé selon l'une des revendications 6 à 8, **caractérisé en ce qu'**au moins un deuxième guide d'ondes optiques (18) déplaçable dans sa direction longitudinale, non enserré par les fils d'acier (2", 12") les plus proches de lui, est toronné avec les fils d'acier (2, 12) pour détecter les dilatations de câble dues à la température.

10. Procédé selon la revendication 9, **caractérisé en ce que** le deuxième guide d'ondes optiques (18) est reçu dans un tube (19) dimensionnellement stable.
